# EUROPÄISCHE PATENTSCHRIFT

(11) **EP 1 206 698 B1**
(45) Veröffentlichungstag und Bekanntmachung des Hinweises auf die Patenterteilung: **16.03.2016**
(21) Anmeldenummer: 00956108.5
(22) Anmeldetag: 02.08.2000
(51) Int. Cl.: G01N 29/00, G01N 29/22, G01N 29/24

(54) **ULTRASCHALL-SENSORANORDNUNG**
ULTRASOUND SENSOR SYSTEM
SYSTEME DE DETECTION PAR ULTRASONS

(30) Priorität: 07.08.1999 DE 19937479
(43) Veröffentlichungstag der Anmeldung: 22.05.2002
(73) Patentinhaber: ROBERT BOSCH GMBH, 70442 Stuttgart (DE)
(72) Erfinder: STUMM, Wolfgang, D-64711 Erbach (DE); ARNDT, Volker, D-64711 Erbach (DE); BLUMENTRITT, Norbert, D-64720 Michelstadt (DE); LACH, Michael, D-40699 Erkrath (DE); PLATTE, Michael, D-42113 Wuppertal (DE)
(74) Vertreter: Thürer, Andreas
(86) Internationale Anmeldenummer: PCT/DE2000/002545
(87) Internationale Veröffentlichungsnummer: WO 2001/011353

(56) Entgegenhaltungen:
- EP-A2- 1 046 452
- EP-B- 0 653 061
- US-A- 3 384 733
- US-A- 4 099 045

## Beschreibung

### Stand der Technik

Die Erfindung geht aus von einer Ultraschall-Sensoranordnung nach der Gattung des unabhängigen Anspruchs. Das Patent US 4,099,045 offenbart eine Schweißelektrode mit einem Ultraschallsensor, welcher am Boden einer sich entlang der Schweißelektrodenlängsachse erstreckenden Sacklochbohrung angeordnet ist. Das Patent EP 0 653 061 B1 offenbart Schweißelektroden mit auf einem Elektrodenschaft angebrachten Prüfköpfen. Das Patent US 3,384,733 offenbart sich gegenüberliegend angeordnete Schweißelektroden mit Sacklochbohrungen, wobei ein Ultraschallsender und ein Ultraschallempfänger gegenüberliegend zueinander angeordnet sind. Im der Offenlegung EP 1 046 452 A2 ist eine Schweißelektrode mit innenliegendem Ultraschallsensor gezeigt. Das in der EP 653 061 B1 beschriebene Auswerteverfahren besteht im wesentlichen darin, den vorgesehenen Schweißbereich während des Schweißvorganges statt mit Longitudinalwellen mit Transversalwellen zu durchschallen. Die Amplitude des Durchschallungssignales wird online erfaßt und als Steuergröße für Amplitude und Zeitverlauf des Schweißstromes verwendet. Die Transversalwelle wird deshalb gewählt, weil der Einfluß der Flüssigkeitsbildung in der Schweißlinse auf die Dämpfung einer durchgelassenen Welle bei dieser Wellenart sehr groß ist. Die sich im Verlauf des Schweißprozesses deutlich und in charakteristischer Weise ändernde Amplitude oder zeitlicher Verlauf der Transversalwelle läßt einen verläßlichen Rückschluß auf die Ausbildung und Größe der Schweißlinse zu und kann somit als Stellgröße für einen Regelprozess verwendet werden.

Die grundsätzliche Durchführbarkeit des Verfahrens und die Verläßlichkeit der Prüfaussage hängt entscheidend von den verwendeten Ultraschall-Sensoren, ihrer Anordnung bezüglich der Schweißelektrode und der Schallausbreitung innerhalb der Schweißelektroden ab. Bei der Realisierung gemäß EP 653 061 B1 sind Ultraschallsender und Empfänger am äußeren Elektrodenschaft oder am Elektrodenhalter befestigt. Es werden Scherwellen, insbesondere Transversal- oder Torsionswellen mit einer Frequenz kleiner 1 MHz erzeugt. Als besonders vorteilhaft wird angegeben, horizontal polarisierte Transversalwellen zu erzeugen, da diese eine geringe Neigung zu unerwünschten Modenumwandlungen bei Reflexionen innerhalb des schallführenden Elektrodenhalters haben. Bei den Ultraschallsendern und-empfängern handelt es sich um sogenannte Scherwellen-Prüfköpfe. Sie enthalten ebene und zumeist runde Piezoplatten von einigen mm bis einigen cm Durchmesser, die bei Anregung mit einer elektrischen Spannung eine Scherbewegung ausführen oder umgekehrt im Empfangsfall auf eine empfangene Scherwelle mit einer Empfangsspannung reagieren. Zur Übertragung von Scherwellen zwischen Prüfkopf und Festkörper müssen sich diese in einem innigen Kontakt zueinander befinden. In der Regel werden sie miteinander verklebt. Damit bei der Schallübertragung in den zylindrischen Elektrodenschaft die gesamte schallempfindliche Kontaktfläche des Prüfkopfes wirksam wird, werden zwischen Prüfkopf und Elektrodenschaft Schall-leitende Vorsatzstücke eingefügt, deren Enden jeweils an die Oberflächen des Prüfkopfes und an die äußere Kontur des Elektrodenschaften materialschlüssig angepaßt sind. Die bezüglich der Rohrwandung vorteilhafte horizontale Polarisationsrichtung läßt sich durch Drehen des Prüfkopfes um seine Achse bzw. um die Achse seiner Abstrahlrichtung erreichen.

Es wird angegeben, daß bei niedrigen Frequenzen auch eine Anordnung der Prüfköpfe senkrecht zum Elektrodenschaft möglich ist. Die Nachteile, die sich durch Abstrahlung in Richtung Elektrodeninnenwand statt in Richtung des Schweißpunktes ergeben, gelten uneingeschränkt auch für Transversalwellen. Es wird lediglich ein geringer Bruchteil der Schallenergie in die eigentlich gewünschte Richtung abgestrahlt. Dies gilt auch bei niedriger Frequenz bzw. kleinem Verhältnis von Durchmesser der verwendeten Piezoplatte zur Wellenlänge. Um den Anteil der in Richtung Schweißlinse abgegebenen Schallenergie zu erhöhen, werden bevorzugt keilförmige Vorsatzstücke verwendet. Eine vollständig in Richtung des Schweißpunktes ausgerichtete Schallabstrahlung läßt sich aber auch damit nicht erreichen.

Eine seitliche Anbringung von Prüfköpfen am Elektrodenschaft ist darüber hinaus in der Praxis aus weiteren Gründen nachteilig. Wegen ihres grundsätzlichen Aufbaus aus Piezoplatte und rückwärtigem Dämpfungskörper haben handelsübliche Scherwellenprüfköpfe eine Tiefenausdehnung, die meist mit ihrem Durchmesser vergleichbar ist, also einige mm bis einige cm. Außerdem besitzen sie hauptsächlich aufgrund des Dämpfungskörpers ein Eigengewicht, das je nach Größe zwischen einigen zehn und einigen hundert Gramm beträgt. Der Dämpfungskörper ist notwendig, um ein gedämpftes Schwingungsverhalten der Piezoplatte bzw. ein breitbandiges Frequenzübertragungsverhalten herbeizuführen. Die Tiefenausdehnung der Prüfköpfe zuzüglich der der verwendeten Vorsatzkeile führt dazu, daß in automatischen Produktionsanlagen, bei denen die Schweißelektroden von Roboterarmen geführt werden, deren Bewegungsfreiheit mehr oder minder eingeengt wird. Beim Bewegen der Schweißelektroden wirken die seitlich angebrachten Prüfkopfe und Vorsatzkeile als seismische Massen. Sie sind ständig wechselnden Beschleunigungskräften ausgesetzt, so daß entsprechende Scherkräfte auf die Verbindungen zwischen Elektrodenschaft, Vorsatzstücken und Prüfköpfen ausgeübt werden. Klebeverbindungen unterliegen bei derartiger Wechsellast der Gefahr von Ermüdungsbrüchen. Bei Kollision mit einem Hindernis besteht außerdem die Gefahr, daß ein Prüfkopf unmittelbar abgerissen oder sogar zerstört wird. Eine solche Anordnung ist daher ohne weitere mechanische Schutzvorrichtungen für den dauerhaften industriellen Einsatz nicht hinreichend betriebssicher.

Bei seitlicher Anbringung von Schwerwellen-Prüfköpfen ist die Verwendung von Vorsatzstücken zur Schalleinleitung in den Elektrodenschaft unumgänglich. Dabei müssen jedoch andere grundsätzliche schalltechnische Nachteile in Kauf genommen werden. Zum einen wirken die Klebeverbindungen zwischen Vorsatzstücken und Elektrodenschaft einerseits und Prüfkopf und Vorsatzstück andererseits je nach dem Verhältnis von Klebeschichtdicke zur Wellenlänge mehr oder minder stark reflektierend, so daß wiederum nur ein Bruchteil der Schallenergie durch die Verbindungsfläche hindurchtritt und das hindurchtretende Ultraschallsignal gegenüber dem ursprünglichen Signal durch jede weitere Klebeschicht zusätzlich geschwächt wird. Bei Verwendung unterschiedlicher Materialien für Vorsatzstück und Elektrodenschaft kommen durch die unterschiedlichen akustischen Impedanzen weitere Reflexionsverluste hinzu. Außerdem unterliegt eine schräg auf die Grenze zweier benachbarter Festkörper auftreffende Schallwelle einer Aufspaltung in hindurchtretende und reflektierte Longitudinal- und Transversalwellen, deren Brechungs- oder Reflexionswinkel sich entsprechend den bekannten physikalischen Gesetzmäßigkeiten für die Schallbrechung aus dem Verhältnis der Schallgeschwindigkeiten der angrenzenden Materialien ergeben. Die durch Klebeschichten und Schallbrechung verursachten Nachteile wären nur dann zu vermeiden, wenn Elektrodenschaft und Vorsatzstück zusammenhängend aus einem Material gefertigt wären. Die Herstellung eines solchen kompliziert geformten Teiles wäre jedoch sehr aufwendig.

Aufgabe der vorliegenden Erfindung ist es, insbesondere in Hinblick auf das genannte Verfahren zur Analyse und Prozeßsteuerung von Widerstands-Punktschweißungen eine verbesserte Ultraschall-Sensoranordnung für Schweißelektroden anzugeben, mit der Ultraschallwellen einer gewünschten Schwingungsmode, insbesondere Transversalwellen wie Scher- oder Torsionswellen mit einer Frequenz kleiner 1 MHz, während des Schweißvorganges in die zu verschweißenden Blechbereiche eingeleitet werden können und mit der die aus den zu verschweißenden Blechbereichen reflektierten oder durch sie hindurchtretenden Ultraschallimpulse detektiert werden können. Sie soll ferner im Sende- und Empfangsfall eine hohe Empfindlichkeit besitzen, einfach zu fertigen sein, geringe Abmessungen aufweisen, so daß die Bewegungsfreiheit der die Schweißelektroden führenden Roboterarme nicht beeinträchtigt wird, und so robust aufgebaut sein, daß sie den wechselnden Beschleunigungkräften, die in automatischen Schweißvorrichtungen beim Positionieren, Aufsetzen und Abheben der Schweißelektroden fortwährend auftreten, standhält.

### Vorteile der Erfindung

Erfindungsgemäß wird die Aufgabe durch eine Ultraschall-Sensoranordnung mit den Merkmalen des Patentanspruches 1 gelöst. Der Ultraschallsensor läßt sich geschützt unterbringen, so daß diese Anordnung sich für den industriellen Einsatz beispielsweise bei Schweißrobotern eignet. Bei einer in dem Sensorträger integrierten Anordnung der Ultraschallsensoren kann - anders als bei einer seitlichen Anordnung - die Baugröße reduziert werden. Zudem lassen sich die Ultraschallsensoren leichter an dem Sensorträger befestigen.

Diese Materialausnehmungen bilden vorzugsweise in Abstrahl- oder Detektionsrichtung ebene Flächen, welche entweder senkrecht zur Längsachse des Sensorträgers ausgerichtet sind, so daß die Hauptabstrahlrichtung der Ultraschallsensoren parallel zur Längsachse des Sensorträgers liegt, oder welche zur Längsachse des Sensorträgers geneigt sind, um andere vorteilhafte Schallausbreitungsrichtungen zu erzeugen.

In einer zweckmäßigen Weiterbildung umfaßt der UltraschallSensor neben einer piezoelektrischen Schicht zumindest eine schalldämmende und/oder reflektierende Schicht. Dadurch läßt sich eine Schallausbreitung in eine gewünschte Richtung lenken, so daß sich die Sende/Empfangsleistung dieser Anordnung verbessert.

Eine weitere vorteilhafte Ausgestaltung sieht eine Zwischenschicht aus nicht piezoelektrischem Material vor, dessen akustische Impedanz annähernd dem Material des Sensorträgers entspricht oder einem Wert, der zwischen Sensormaterial und Sensorträger liegt. Diese Zwischenschicht ist vorzugsweise zwischen dem Sensorträger und der die Ultraschallwellen erzeugenden piezoelektrischen Schicht angeordnet. Dadurch läßt sich eine gute Schallübertragung zwischen dem Piezoelement und dem Sensorträger erreichen. Außerdem stellt diese Zwischenschicht eine elektrische Isolation zwischen Piezoelement und Sensorträger sicher.

In einer zweckmäßigen Weiterbildung sind Mittel zur Verhinderung einer Ultraschallausbreitung in radial zur Längsachse des Sensorträgers verlaufender Richtung vorgesehen. So erstreckt sich beispielsweise zwischen dem Ultraschallsensor und dem Sensorträger parallel zu dessen Längsachse ein Zwischenraum oder eine Trennschicht, um eine radiale Ultraschallausbreitung zu unterbinden. Sendeleistung und/oder Empfangsempfindlichkeit lassen sich dadurch verbessern.

Eine vorteilhafte Ausgestaltung sieht Mittel zur elektrischen Abschirmung der piezoelektrischen Schicht vor, um Störeinflüsse zu reduzieren.

Bei einer Weiterbildung besteht der Sensor aus mindestens zwei Schichten piezoelektrischen Materials mit von Schicht zu Schicht alternierenden Polarisationsrichtungen. Diese Anordnung erlaubt eine Verbesserung der Sende- und/oder Empfangseigenschaften, da sich damit höhere Feldstärken und dementsprechend größere Auslenkungen erzielen lassen.

Die vorgeschlagene Sensoranordnung ist für den Einsatz bei Schweißelektroden eingeschränkt.

Weitere zweckmäßige Weiterbildungen ergeben sich aus weiteren abhängigen Ansprüchen und aus der Beschreibung.

### Zeichnung

Eine Ausführungsbeispiel der Erfindung ist in der Zeichnung dargestellt und wird im folgenden näher beschrieben. Es zeigen:
Fig. 1a, 1d, 1e, 1f Ausführungsformen der erfindungsgemäßen Ultraschall-Sensoranordnung,
Fig. 1b und 1c nicht beanspruchte Ausführungsformen,
Fig. 2 eine Ausführungsform der erfindungsgemäßen Ultraschall-Sensoranordnung mit einem sich in Richtung Elektrodenspitze hin verjüngenden Elektrodenschaft,
Fig. 3 den prinzipiellen Aufbau einer Ausführungsformen des in der Ultraschall-Sensoranordnung verwendeten UltraschallSensors in Stapeltechnik,
Fig. 4 eine hinsichtlich der erfindungsgemäßen Ultraschall-Sensoranordnung schalltechnisch günstige Ausführungsform einer aus Elektrodenschaft und Elektrodenkappe bestehenden Schweißelektrode,
Fig. 5 eine Variante einer im Elektrodenschaft integrierten Ultraschall-Sensoranordnung,
Fig. 6 eine Variante einer in einem Zwischenstück integrierten Ultraschall-Sensoranordnung.

### Beschreibung der Ausführungsbeispiele

Die Ausführungsbeispiele beziehen sich auf die erfindungsgemäße Anwendung bei Schweißelektroden. Der Elektrodenschaft bildet den Sensorträger für zumindest einen Ultraschallsensor.

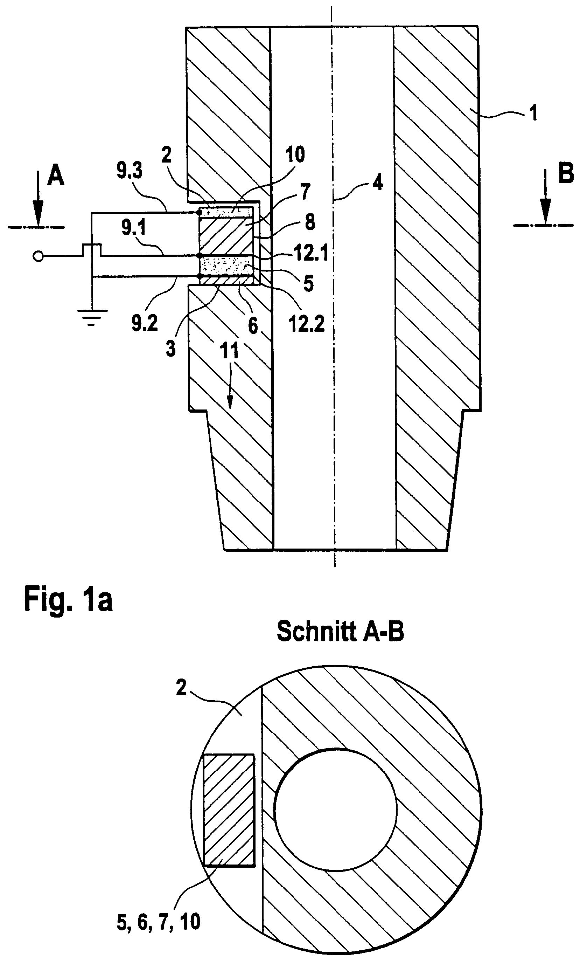

Fig. 1a zeigt die prinzipielle Wirkungsweise der erfindungsgemäßen Ultraschall-Sensoranordnung am Beispiel einer der möglichen Ausführungsformen. Für die grundsätzliche Wirkungsweise der Erfindung ist es unerheblich, ob die Schweißelektroden zweigeteilt sind und aus Elektrodenschaft und -kappe bestehen und wie sie an ihrem rückwärtigem Ende geformt sind, um von einer Halterung aufgenommen zu werden. In dieser und in den nachfolgenden Abbildungen wird auf die Darstellung dieser Details daher zunächst verzichtet. Im Elektrodenschaft 1 ist eine nutförmige Ausnehmung 2 eingearbeitet. Die der Elektrodenspitze zugewandte Seite der Nut bildet eine Fläche 3, die senkrecht zur Längsachse 4 des Elektrodenschaftes 1 ausgerichtet ist. Auf ihr befindet sich eine - z.B. rechteckförmige - Schicht 5 aus piezoelektrischem Material. Diese ist beidseitig durch elektrisch leitfähige Schichten 12.1, 12.2 mit Elektroden versehen, die mit den elektrischen Zuleitungen 9.1, 9.2 verbunden sind. Die mit den beidseitigen Elektroden versehene piezoelektrische Schicht 5 ist unter Einfügen einer Zwischenschicht 6 mit der Oberfläche 3 so verbunden, daß eine gute Schallübertragung von der piezoelektrischen Schicht 5 in den Elektrodenschaft 1 gewährleistet ist. Die Zwischenschicht 6 hat entweder nur die Funktion einer elektrischen Isolation zwischen piezoelektrischer Schicht 5 und dem Elektrodenschaft 1. In diesem Fall wird vorzugsweise ein Material mit ähnlicher akustischer Impedanz wie das angrenzende piezoelektrische Material oder wie die zur Herstellung der Elektrode verwendete Legierung gewählt. Oder aber die Zwischenschicht 6 wird als akustische Anpassungsschicht ausgelegt. Dabei wird ihre akustische Impedanz und ihre Dicke je nach Verhältnis der akustischen Impedanzen von Piezoschicht und Elektrodenmaterial so ausgewählt, daß die Bedingungen für eine akustische Viertelwellenlängen- oder Halbwellenlängen-Anpassung erfüllt sind. In einer vereinfachten Ausführung kann jedoch auf die Schicht 6 auch gänzlich verzichtet werden. Die Schichten 5, 6 können auf die Fläche 3 z.B. durch Verkleben aufgebracht werden. Der Einfluß der Klebeschichten auf die akustische Durchlässigkeit wird minimiert, indem beim Verkleben ein so hoher Anpreßdruck aufgewendet wird, daß die Klebeschichtdicken sehr viel kleiner als die Wellenlänge der vom Piezomaterial erzeugten Schallwelle werden.

Auf die Rückseite der Piezoschicht wird in ähnlicher Weise eine dämpfende und schallabsorbierende und/oder - reflektierende Schichten 7 aufgebracht. Sie gewährleistet, daß von der Rückseite der piezoelektrischen Schicht 5 keine Schallanteile in den Elektrodenschaft 1 gelangen, indem diese Anteile absorbiert oder wieder nach vorne in Richtung 11, d.h. in Richtung Elektrodenkappe oder -spitze, reflektiert werden. Durch einen seitlichen Zwischenraum 8 oder eine ihn ausfüllende akustische Trennschicht kann verhindert werden, daß von den Seitenkanten der piezoelektrischen Schicht 5 Schallanteile radial in den Elektrodenschaft 1 gelangen. Auf diese Weise gelingt es, die gesamte in der piezoelektrischen Schicht erzeugte Ultraschallenergie in Richtung Elektrodenspitze 1.1 abzustrahlen, so daß die Sendeleistung dieser Anordnung gegenüber dem bisher bekannten seitlichen Einbringen des Ultraschalls am äußeren Elektrodenschaft beträchtlich erhöht wird.

Aufgrund der Umkehrbarkeit der Schallwege gelten dieselben Verhältnisse auch im Empfangsfall, so daß die erfindungsgemäße Anordnung in Fig. 1a auch eine erheblich erhöhte Empfangsempfindlichkeit besitzt gegenüber dem Fall, daß das Ultraschallsignal seitlich am äußeren Elektrodenschaft 1 abgegriffen wird.

Für die Übertragung von Transversalwellen ist die Anordnung der schallerzeugenden piezoelektrischen Schicht 5 innerhalb des Elektrodenschaftes 1 senkrecht zu dessen Längsachse 4 desweiteren auch deshalb noch besonders vorteilhaft, weil bei Schallabstrahlung parallel zur Längsachse 4 des Elektrodenschafts 1 lediglich ein streifender Schalleinfall bezüglich der äußeren und inneren Wand des Elektrodenschaftes 1 erfolgt. Bei streifendem Schalleinfall ist nach dem physikalischen Brechungsgesetz aufgrund der höheren Ausbreitungsgeschwindigkeit der Longitudinalwelle gegenüber der Transversalwelle grundsätzlich keine Abspaltung einer Longitudinalwelle möglich, so daß dadurch der ursprünglichen Transversalwelle auch keine Energie entzogen wird, wie es etwa bei zick-zack förmiger Reflexion der Fall wäre, wenn der Ultraschall unter einem geringeren Einschallwinkel am äußeren Elektrodenschaft eingekoppelt würde.

Um eine elektrische Abschirmung der piezoelektrischen Schicht 5 zu erreichen, kann z.B. auf die rückwärtige Schicht 7 eine elektrisch leitfähige und über eine Zuleitung 9.3 mit Massepotential verbundene (Abschirm)Schicht 10 oder anderweitig geformte elektrisch leitende Schirmbleche oder - folien eingefügt werden. Bevorzugt werden dabei die Schicht 10 und die vordere Elektrode 12.2 der piezoelektrischen Schicht 5 auf gemeinsames Potential gelegt. Wie anhand von Fig. 1a erläutert werden soll, kann eine besonders vorteilhafte Ausführung der erfindungsgemäßen Sensoranordnung realisiert werden, wenn ein piezoelektrisches Material verwendet wird, dessen akustische Impedanz annähernd derjenigen des Elektrodenschaftes entspricht. Wenn gleichzeitig die Schicht 6 entfällt oder aus einem Material mit ähnlicher akustischer Impedanz wie das Elektrodenmaterial besteht, wird das Ein- und Ausschwingen der Piezoplatte so bedämpft, daß auf einen rückwärtigen Dämpfungskörper (Schicht 7) völlig verzichtet werden kann und die Bauhöhe des den Ultraschallsensor bildenden Schichtpaketes, bestehend aus den Schichten 6, 5, 7 und 10, sehr klein gehalten werden kann. Dann kann die Sensoranordnung auch in Schweißrobotern verwendet werden, die aus räumlichen Erfordernissen mit Elektroden bestückt sind, deren Schäfte nur sehr kurz sind.

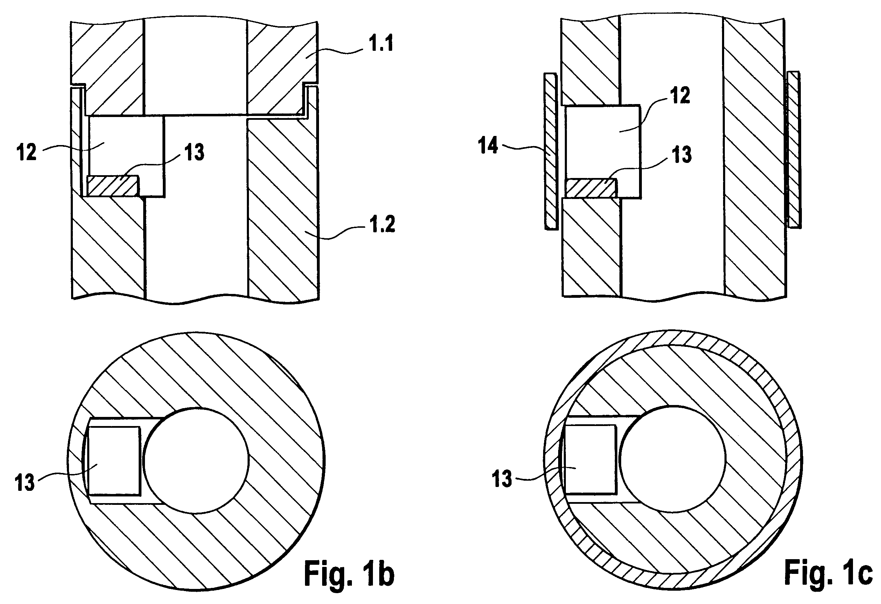

Gemäß der nicht beanspruchten Ausführungsform in Fig. 1b kann die Nut 12 zur Aufnahme eines Ultraschallsensors 13, bestehend z.B. aus piezoelektrischer Schicht 5, Isolations- oder Anpaßschicht 6 sowie rückwärtiger Dämpfungs- oder Reflexionsschicht 7 wie in Fig. 1a, auch an der Innenseite des Elektrodenschaftes 1 angebracht sein. In diesem Fall müssen die elektrischen Zuleitungen durch die Wand des Elektrodenschaftes oder durch die innere Kühlbohrung hindurchgeführt werden. Die Herstellung der Innennut wird vereinfacht, wenn der Elektrodenschaft zunächst in zwei Teilen 1.1 und 1.2 hergestellt wird, die später materialschlüssig z.B. mittels eines Gewindes zusammengefügt werden, damit hinsichtlich des hohen Schweißstromes der Übergangswiderstand klein bleibt.

Gemäß der nicht beanspruchten Ausführungsform Fig. 1c kann die Nut 12 auch als Durchbruch von Innen zur Außenwand des Elektrodenschaftes ausgebildet sein. In diesem Fall muß die Nut z.B. durch eine seitliche Hülse 14 aus Kunststoff abgedichtet werden, um den Austritt von Kühlwasser aus der Kühlbohrung zu verhindern.

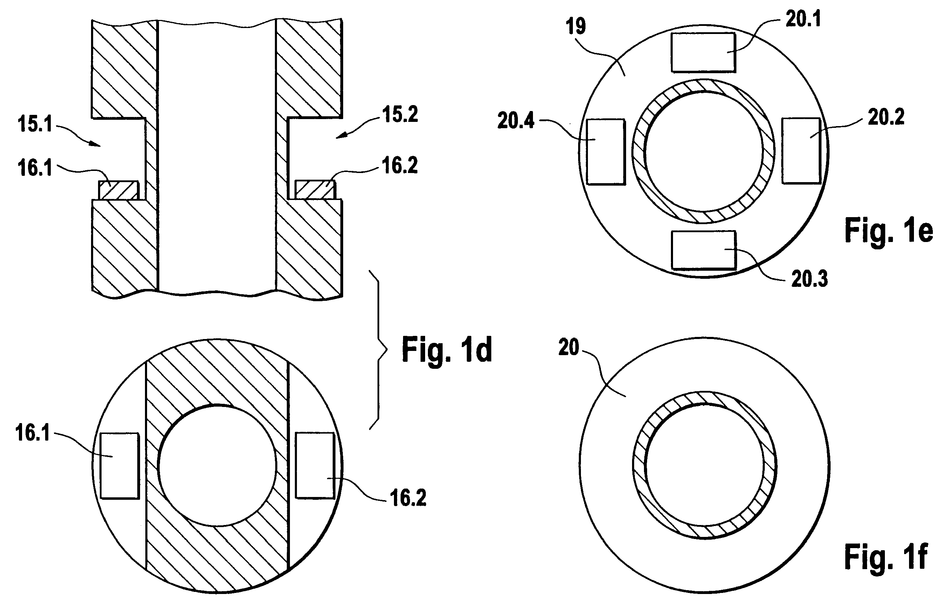

In einer weiteren vorteilhaften Ausführung der Ultraschall-Sensoranordnung werden erfindungsgemäß in den Elektrodenschaft 1 nicht nur eine Nut zur Aufnahme einer piezoelektrischen Schicht bzw. eines Sensors eingebracht wie in Fig. 1a-c, sondern zwei - z.B. diametral gegenüberliegende Nuten 15.1, 15.2 wie in Fig. 1d - oder auch weitere, die auf den Umfang verteilt werden. Jede Nut für sich dient zur Aufnahme einer piezoelektrischen Schicht, bzw. eines Ultraschallsensors (16.1, 16.2 in Fig. 1d). Alle so gebildeten einzelnen Sensoren werden elektrisch parallel geschaltet und zeitgleich betrieben, so daß sie wie ein einziger zusammengehöriger Sensor wirken. Hierdurch wird die in den Elektrodenschaft abgegebene Ultraschall-Leistung im Verhältnis der abstrahlenden Flächen erhöht, so daß die im Bereich der Schweißlinse wirkende Intensität in gleichem Maße erhöht wird und ein verbessertes Verhältnis von Nutzzu Störsignalen eintritt.

In einer weiteren Ausgestaltung der Erfindung kann die Nut gemäß Fig. 1e ringförmig längs des gesamten Umfangs des Elektrodenschaftes ausgelegt werden und die so entstandene ringförmige Fläche 19 mit einer größeren Anzahl z.B. reckeckförmiger piezoelektrischer Schichten 20.n (n = 1, 2 ....N) belegt werden. Fig. 1e zeigt dies für den Fall N=4. Vorteilhaft kann auch sein sein, gemäß Fig. 1f die gesamte Fläche 19 der Ringnut mit piezoelektrischem Material zu belegen und als abstrahlende Fläche zu nutzen. Dazu können entsprechende Ringe 20 oder zu Ringen zusammensetzbare Ringsegmente aus piezoelektrischem Material auf die Fläche 19 aufgeklebt werden.

Die Sensoranordnungen gemäß Fig 1d, 1e und 1f können sinngemäß auch mit innenliegenden Nuten ausgeführt werden. Allen möglichen Ausgestaltungen der Nut zur Aufnahme der piezoelektrischen Schichten liegt lediglich die Bedingung zugrunde, daß der verbleibende kleinste Querschnitt des Elektrodenschaftes mit seinem dadurch erhöhten elektrischen Widerstand den elektrische Stromfluß nicht so beeinträchtigt, daß z.B. eine starke Erwärmung des Elektrodenschaftes eintritt oder aber die Stromquelle den gewünschten Stromfluß nicht erbringen kann.

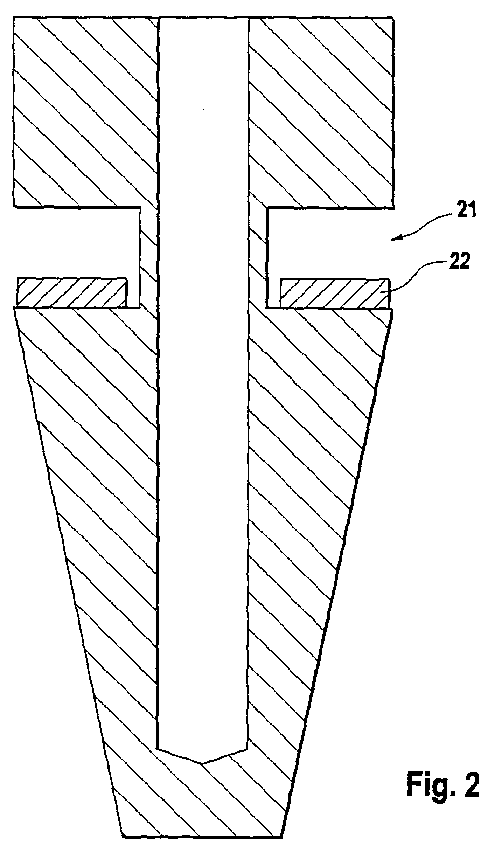

In einer weiteren vorteilhaften Ausgestaltung der Erfindung gemäß Fig. 2 wird im oberen Bereich des Elektrodenschaftes zunächst ein möglichst großer Außendurchmesser gewählt. Ausgehend von der Nut 21 zur Aufnahme der piezoelektrischen Schicht(en) 22 verjüngt sich der Elektrodenschaft nach unten hin in Richtung Elektrodenspitze. Der Außendurchmesser des Schaftes kann z.B. linear oder exponentiell mit zunehmendem Abstand von der Nut abnehmen. Die Kontur des unteren Teils besitzt dann Konusform oder die Form eines Exponentialtrichters. Besonders vorteilhaft ist hier, daß die Fläche der piezoelektrischen Schicht(en) 22 gegenüber einem durchgängig dünnen Elektrodenschaft groß ist und wiederum die erzeugte Ultraschall-Leistung bzw. die im Bereich der Schweißlinse wirksame Ultraschallintensität proportional zur Fläche der wirksamen piezoelektrischen Schicht 22 zunimmt, während durch die nach unten hin erfolgende Verjüngung des Elektrodenschaftes die Bewegungsfreiheit beim Positionieren der Schweißelektroden erhalten bleibt.

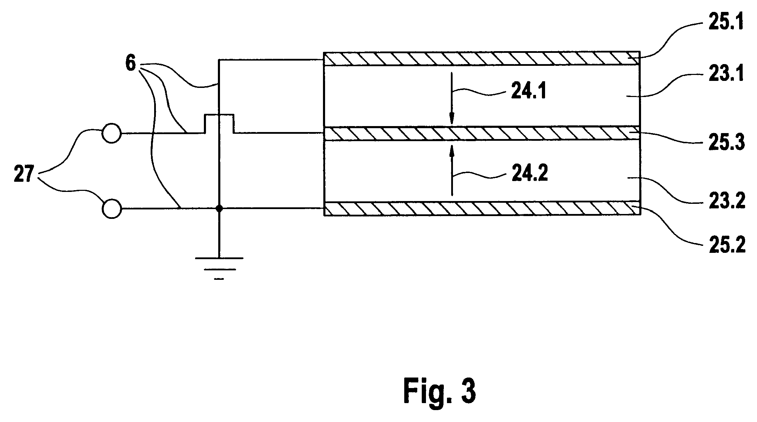

Weitere erfindungsgemäße Ausgestaltungen der Ultraschall-Sensoranordnung dienen ebenfalls der Erhöhung der Sende- bzw. Empfangsempfindlichkeit. So können die in den Materialaussparungen im Elektrodenschaft untergebrachten piezoelektrischen Schichten oder Sensoren in Stapelbauweise ausgelegt sein und aus mehreren fluchtend übereinandergestapelten und akustisch miteinander verbundenen Schichten aus piezoelektrischem Material bestehen. Fig. 3 zeigt dies am Beispiel von zwei piezoelektrischen Schichten 23.1, 23.2 der Dicke d. Durch die flächenhaft aufgebrachten Elektroden 25.1, 25.2 und 25.3 bilden die Piezoelemente 23.1, 23.2 zwei elektrische Kondensatoren, die über die elektrischen Zuleitungen 26 elektrisch parallel geschaltet sind. Die Polarisationsrichtungen 24.1, 24.2 der Piezoelemente 23.1, 23.2 weisen jedoch in entgegengesetzte Richtung. Daher schwingt der Stapel aus den Piezoelementen 23.1 und 23.2 beim Anlegen einer elektrischen Spannung an die Klemmen 27 wie ein Piezoelement der Dicke D = 2d. Im Gegensatz dazu wird jedoch in jedem Piezoelement des Stapels eine Feldstärke E=U/d erzeugt, die zweifach so hoch ist wie beim Anlegen derselben Spannung an ein einziges Piezoelement mit einer Dicke D=2d, so daß auch der erzeugte Schalldruck zweifach so hoch ist. Die äußeren Elektroden 25.1 und 25.2 wirken dabei gleichzeitig als elektrische Abschirmung.

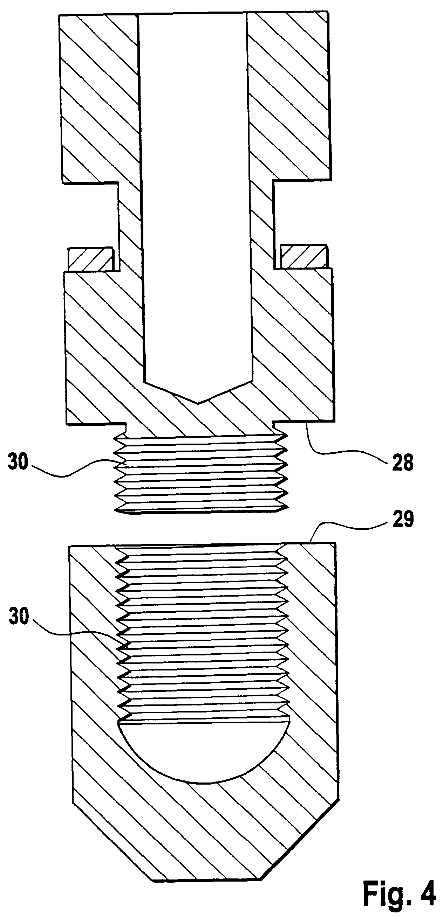

Schließlich kann zur Verbesserung der Schallübertragung vom Elektrodenschaft zur Elektrodenkappe der Elektrodenschaft an seinem unteren Ende gemäß Fig. 4 einen flächenhaften Absatz 28 aufweisen, der bei aufgesteckter Elektrodenkappe mit einem an der Elektrodenkappe entsprechend flächenhaft ausgebildeten Absatz 29 eine materialschlüssige und daher schalldurchlässige Kontaktfläche bildet. Zweckmäßigerweise werden Elektrodenkappe und Elektrodenschaft dazu mit je einem Schraubgewinde 30 versehen, so daß die beiden Flächen 28, 29 unter eine hohe Vorspannung gesetzt werden können. Hierdurch wird ein stets bezüglich der sich materialschlüssig berührenden Flächen gleichbleibender und hinsichtlich der Ultraschall-Durchlässigkeit günstiger Kontakt erreicht.

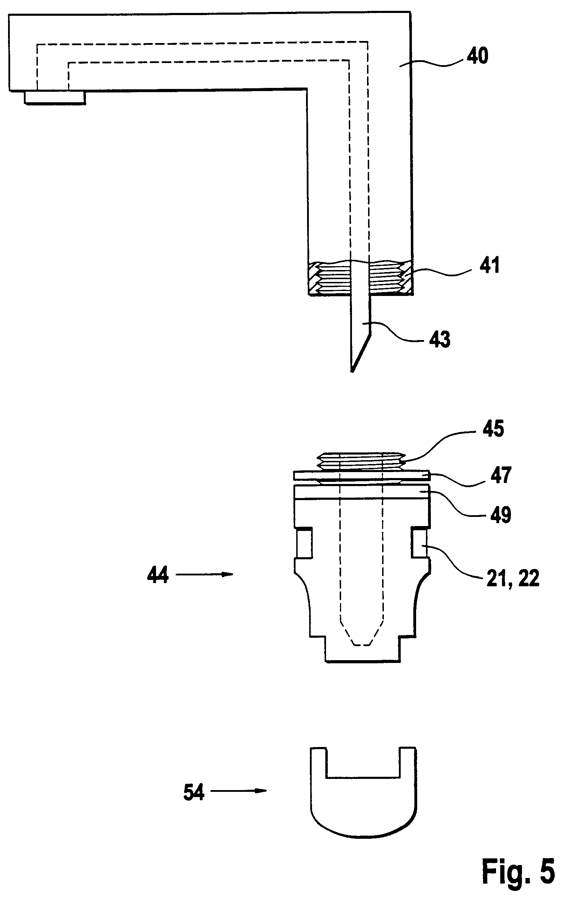

Bei dem Ausführungsbeispiel gemäß Figur 5 ist im Inneren eines Elektrodenarms 40 ein Kühlrohr 43 geführt. Zur Verbindung des Elektrodenarms 40 mit dem Elektrodenschaft 44 ist am Ende des Elektrodenarms 40 ein Innengewinde 41 vorgesehen, das auf ein Außengewinde 45 des Elektrodenschafts 44 geschraubt wird. Zwischen dem Außengewinde 45 und einem Schlüsselflansch 49 des Elektrodenschafts 44 ist ein Dichtring 47 angeordnet. In dem Elektrodenschaft 44 sind in Materialaussparungen 21 Ultraschall-Sensoren 22 integriert, wie oben ausführlich beschrieben. Auf den Elektrodenschaft 44 kann eine Elektrodenkappe 54 aufgebracht werden.

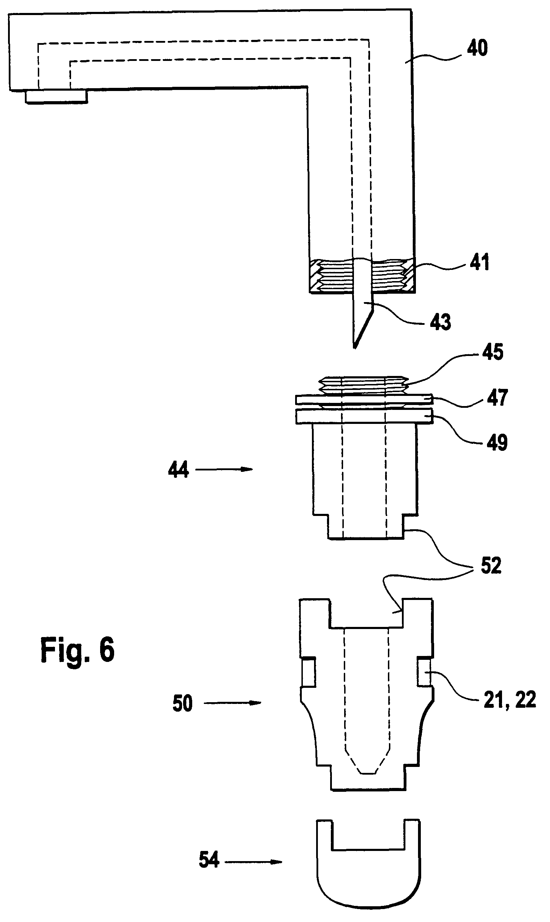

Das Ausführungsbeispiel gemäß Figur 6 unterscheidet sich von dem nach Figur 5 insbesondere darin, daß ein zusätzliches Zwischenstück 50 mit Materialaussparungen 21 vorgesehen ist, in denen die Ultraschall-Sensoren 22 angeordnet sind. Die Verbindung des Elektrodenschafts 44 mit dem Zwischenstück 50 erfolgt über eine konische Passung 52.

## Patentansprüche

1. Ultraschall-Sensoranordnung, mit zumindest einem Sensor (5, 6, 7, 10), der Ultraschallwellen einer gewünschten Schwingungsart während des Detektionsvorganges in zu detektierende Bereiche einleitet und/oder der Ultraschallwellen detektiert, wobei an einem Sensorträger (1; 44) wenigstens eine Materialausnehmung (2; 21) vorgesehen ist, in der zumindest ein Sensor (5, 6, 7, 10; 22) untergebracht ist, **dadurch gekennzeichnet, dass** es sich bei dem Sensorträger (1; 44) um einen Elektrodenschaft (1; 44) einer aus Elektrodenschaft (1; 44) und Elektrodenkappe (1; 54) bestehenden Schweißelektrode handelt, wobei die Materialausnehmung (2; 21) als eine nutförmige Ausnehmung (2; 21) in die Mantelfläche des Elektrodenschaftes (1; 44) eingearbeitet ist und die der Elektrodenspitze zugewandte Seite der nutförmigen Ausnehmung (2; 21) eine Fläche (3) bildet, die senkrecht zur Längsachse (4) des Elektrodenschaftes (1; 44) ausgerichtet ist und auf welcher sich eine Schicht (5) aus piezoelektrischem Material befindet.

2. Ultraschall-Sensoranordnung nach Anspruch 1, **dadurch gekennzeichnet, daß** als Sensor (5, 6, 7, 10) zumindest eine Platte, Scheibe, Ring oder Segment aus piezoelektrischem Material verwendet wird.

3. Ultraschall-Sensoranordnung nach einem der vorhergehenden Ansprüche, **dadurch gekennzeichnet, daß** der Sensor (5, 6, 7, 10) zumindest eine schalldämmende und/oder reflektierende Schicht (7) umfaßt.

4. Ultraschall-Sensoranordnung nach einem der vorhergehenden Ansprüche, **dadurch gekennzeichnet, daß** der Sensor (5, 6, 7, 10) eine Schicht (6) aus nicht piezoelektrischem Material umfaßt, dessen akustische Impedanz annähernd dem Material des Sensorträgers (1) entspricht.

5. Ultraschall-Sensoranordnung nach einem der vorhergehenden Ansprüche, **dadurch gekennzeichnet, daß** Mittel (8) vorgesehen sind zur Verhinderung einer Ultraschallausbreitung in radial zur Längsachse (4) des Sensorträgers (1) verlaufender Richtung.

6. Ultraschall-Sensoranordnung nach einem der vorhergehenden Ansprüche, **dadurch gekennzeichnet, daß** Mittel (10) zur elektrischen Abschirmung der piezoelektrischen Schicht (5) vorgesehen sind.

7. Ultraschall-Sensoranordnung nach einem der vorhergehenden Ansprüche, **dadurch gekennzeichnet, daß** der Sensor (5, 6, 7, 10) aus mindestens zwei Schichten (23.1, 23.2) aus piezoelektrischem Material besteht.

8. Ultraschall-Sensoranordnung nach Anspruch 8, **dadurch gekennzeichnet, daß** die zumindest zwei Schichten (23.1, 23.2) aus piezoeletkrischem Matrial von Schicht zu Schicht wechselweise entgegengesetze Polarisationsrichtungen (24.1, 24.2) besitzen.

9. Ultraschall-Sensoranordnung nach Anspruch 7 oder 8, **dadurch gekennzeichnet, daß** die zumindest zwei Schichten (23.1, 23.2) aus piezoelektrischem Material elektrisch parallel geschaltet sind.

10. Ultraschall-Sensoranordnung nach einem der Ansprüche 7 bis 9, **dadurch gekennzeichnet, daß** die Anzahl der Schichten (23.1, 23.2) 2n beträgt, wobei n eine ganze Zahl ist, und/oder die jeweils äußere(n) Schichte(n) auf Massepotential liegen.

11. Ultraschall-Sensoranordnung nach einem der vorhergehenden Ansprüche, **dadurch gekennzeichnet, daß** der Sensor (5, 6, 7, 10) eine zwischen der piezoelektrischen Schicht (5) und der im Sensorträger (1) befindlichen Fläche (3) angeordnete elektrisch isolierende, jedoch schallleitfähige Zwischenschicht (6) umfaßt.

12. Ultraschall-Sensoranordnung nach Anspruch 1, **dadurch gekennzeichnet, daß** sich der äußere Elektrodenschaft (1) in Richtung Elektrodenspitze verjüngt.

13. Ultraschall-Sensoranordnung nach einem der Ansprüche 1 oder 12, **dadurch gekennzeichnet, daß** der Elektrodenschaft (1) an seinem unteren Ende einen flächenhaften Absatz aufweist, der bei aufgesteckter Elektrodenkappe mit einem entsprechenden flächenhaft ausgebildeten Bereich der Elektrodenkappe eine materialschlüssige und schalldurchlässige Kontaktfläche bildet.

14. Ultraschall-Sensoranordnung nach einem der vorhergehenden Ansprüche, **dadurch gekennzeichnet, daß** der Sensor (5, 6, 7, 10) Transversalwellen erzeugt und/oder detektiert.

15. Ultraschall-Sensoranordnung nach Anspruch 14, **dadurch gekennzeichnet, daß** es sich bei den Transversalwellen um Scher- oder Torsionswellen handelt.

16. Ultraschall-Sensoranordnung nach einem der vorhergehenden Ansprüche, **dadurch gekennzeichnet, daß** Wellen erzeugt werden mit einer Frequenz kleiner 1 MHz.

## Claims

1. Ultrasound sensor system, comprising at least one sensor (5, 6, 7, 10), which during the detection process introduces ultrasonic waves of a desired mode of oscillation into regions to be detected and/or detects the ultrasonic waves, wherein at least one material recess (2; 21) in which at least one sensor (5, 6, 7, 10; 22) is accommodated is provided on a sensor carrier (1; 44), **characterized in that** the sensor carrier (1; 44) is an electrode shaft (1; 44) of a welding electrode consisting of an electrode shaft (1; 44) and an electrode cap (1; 54), wherein the material recess (2; 21) is worked into the lateral surface of the electrode shaft (1; 44) as a groove-shaped recess (2; 21) and the side of the groove-shaped recess (2; 21) that is facing the electrode tip forms an area (3) that is aligned perpendicularly to the longitudinal axis (4) of the electrode shaft (1; 44) and on which there is a layer (5) of piezoelectric material.

2. Ultrasound sensor system according to Claim 1, **characterized in that** at least one plate, disc, ring, or segment of piezoelectric material is used as the sensor (5, 6, 7, 10).

3. Ultrasound sensor system according to one of the preceding claims, **characterized in that** the sensor (5, 6, 7, 10) comprises at least one sound-damping and/or reflecting layer (7).

4. Ultrasound sensor system according to one of the preceding claims, **characterized in that** the sensor (5, 6, 7, 10) comprises a layer (6) of nonpiezoelectric material, the acoustic impedance of which corresponds approximately to the material of the sensor carrier (1).

5. Ultrasound sensor system according to one of the preceding claims, **characterized in that** means (8) for preventing propagation of ultrasonic waves in a direction extending radially to the longitudinal axis (4) of the sensor carrier (1) are provided.

6. Ultrasound sensor system according to one of the preceding claims, **characterized in that** means (10) for electrically shielding the piezoelectric layer (5) are provided.

7. Ultrasound sensor system according to one of the preceding claims, **characterized in that** the sensor (5, 6, 7, 10) consists of at least two layers (23.1, 23.2) of piezoelectric material.

8. Ultrasound sensor system according to Claim 8, **characterized in that** the at least two layers (23.1, 23.2) of piezoelectric material have opposite directions of polarization (24.1, 24.2) alternating from layer to layer.

9. Ultrasound sensor system according to Claim 7 or 8, **characterized in that** the at least two layers (23.1, 23.2) of piezoelectric material are electrically connected in parallel.

10. Ultrasound sensor system according to one of Claims 7 to 9, **characterized in that** the number of layers (23.1, 23.2) is 2n, where n is an integer, and/or the respectively outer layer(s) is/are at frame potential.

11. Ultrasound sensor system according to one of the preceding claims, **characterized in that** the sensor (5, 6, 7, 10) comprises an electrically insulating, but acoustically conductive intermediate layer (6) located between the piezoelectric layer (5) and the area (3) in the sensor carrier (1).

12. Ultrasound sensor system according to Claim 1, **characterized in that** the outer electrode shaft (1) tapers in the direction of the electrode tip.

13. Ultrasound sensor system according to either of Claims 1 and 12, **characterized in that** the electrode shaft (1) has at its lower end a shoulder with a surface-area extent which, when the electrode cap is attached, forms a material-bonding and sound-permeable contact area with a corresponding region of the electrode cap formed with a surface-area extent.

14. Ultrasound sensor system according to one of the preceding claims, **characterized in that** the sensor (5, 6, 7, 10) generates and/or detects transverse waves.

15. Ultrasound sensor system according to Claim 14, **characterized in that** the transverse waves are shear or torsional waves.

16. Ultrasound sensor system according to one of the preceding claims, **characterized in that** waves with a frequency of less than 1 MHz are generated.

## Revendications

1. Système de détection par ultrasons, comportant au moins un capteur (5, 6, 7, 10), qui introduit des ondes d'ultrasons d'un type d'oscillation souhaité pendant le processus de détection dans les zones à détecter et/ou détecte les ondes d'ultrasons, dans lequel sur un support de capteur (1 ; 44) au moins une cavité de matériau (2 ; 21) est prévue, dans laquelle au moins un capteur (5, 6, 7, 10 ; 22) est renfermé, **caractérisé en ce que** le support de capteur (1 ; 44) consiste en un corps d'électrode (1 ; 44) d'une électrode de soudure constituée d'un corps d'électrode (1 ; 44) et d'un capuchon d'électrode (1 ; 54), dans lequel la cavité de matériau (2 ; 21) est façonnée comme une cavité en forme de rainure (2 ; 21) dans la surface de gaine du corps d'électrode (1 ; 44) et le côté tourné vers la pointe d'électrode, de la cavité en forme de rainure (2 ; 21) forme une surface (3), qui est réalisée perpendiculairement à l'axe longitudinal (4) du corps d'électrode (1 ; 44) et sur laquelle se trouve une couche (5) de matériau piézoélectrique.

2. Système de détection par ultrasons selon la revendication 1, **caractérisé en ce que** comme capteur (5, 6, 7, 10) au moins une plaque, un disque, un anneau ou un segment de matériau piézoélectrique est utilisé.

3. Système de détection par ultrasons selon une des revendications précédentes, **caractérisé en ce que** le capteur (5, 6, 7, 10) comprend au moins une couche insonorisante et/ou réfléchissante (7).

4. Système de détection par ultrasons selon une des revendications précédentes, **caractérisé en ce que** le capteur (5, 6, 7, 10) comprend une couche (6) constituée d'un matériau non piézoélectrique, dont l'impédance acoustique correspond approximativement au matériau du support de capteur (1).

5. Système de détection par ultrasons selon une des revendications précédentes, **caractérisé en ce que** des moyens (8) sont prévus pour empêcher la propagation d'ultrasons dans une direction s'étendant radialement à l'axe longitudinal (4) du support de capteur (1).

6. Système de détection par ultrasons selon une des revendications précédentes, **caractérisé en ce que** des moyens (10) de blindage électrique de la couche piézoélectrique (5) sont prévus.

7. Système de détection par ultrasons selon une des revendications précédentes, **caractérisé en ce que** le capteur (5, 6, 7, 10) est constitué d'au moins deux couches (23.1, 23.2) de matériau piézoélectrique.

8. Système de détection par ultrasons selon la revendication 8, **caractérisé en ce que** au moins deux couches (23.1, 23.2) en matériau piézoélectrique possèdent de couchent à couche en alternance des directions de polarisation opposées (24.1, 24.2).

9. Système de détection par ultrasons selon la revendication 7 ou 8, **caractérisé en ce que** au moins deux couches (23.1, 23.2) en matériau piézoélectrique sont branchées électriquement en parallèle.

10. Système de détection par ultrasons selon une des revendications 7 à 9, **caractérisé en ce que** le nombre des couches (23.1, 23.2) s'élève à 2n, dans lequel n est un nombre entier et/ou la(les) couche(s) extérieure(s) respective(s) reposent sur le potentiel de masse.

11. Système de détection par ultrasons selon une des revendications précédentes, **caractérisé en ce que** le capteur (5, 6, 7, 10) comprend une couche intermédiaire (6) isolante électriquement, néanmoins conductrice de sons disposée entre la couche piézoélectrique (5) et la surface (3) se trouvant dans le support de capteur (1).

12. Système de détection par ultrasons selon la revendication 1, **caractérisé en ce que** le corps d'électrode extérieur (1) s'amincit dans la direction de la pointe d'électrode.

13. Système de détection par ultrasons selon une des revendications 1 à 12, **caractérisé en ce que** le corps d'électrode (1) présente sur son extrémité inférieure un prolongement adhérent en surface, qui lorsque le capuchon d'électrode est enfoncé forme avec une zone adhérente en surface conçue de manière correspondante du capuchon d'électrode une surface de contact par conjonction de matériau et perméable aux sons.

14. Système de détection par ultrasons selon une des revendications précédentes, **caractérisé en ce que** le capteur (5, 6, 7, 10) génère et/ou détecte des ondes transversales.

15. Système de détection par ultrasons selon la revendication 14, **caractérisé en ce que** les ondes transversales consistent en ondes de cisaillement ou ondes de torsion.

16. Système de détection par ultrasons selon une des revendications précédentes, **caractérisé en ce que** les ondes sont générées avec une fréquence inférieure à 1 MHz.
